# EUROPEAN PATENT SPECIFICATION

(11) **EP 0 375 703 B1**
(45) Date of publication and mention of the grant of the patent: **02.08.1995**
(21) Application number: 88906996.9
(22) Date of filing: 11.08.1988
(51) Int. Cl.: G06F 3/033, G06F 15/02

(54) **Method of and apparatus for processing handwritten graphical input in a stylus controlled data processing apparatus**
Verfahren und Vorrichtung zum Verarbeiten handgeschriebener graphischer Eingaben in einer mit einem Schreibstift gesteuerten Datenverarbeitungseinrichtung
Méthode et appareil pour le traitement d'entrées graphiques manuscrites dans un appareil de traitement de données controllé par un stylet

(30) Priority: 21.08.1987 GB 8719829
(43) Date of publication of application: 04.07.1990
(73) Proprietor: RANDALL, Stephen, London NW8 (GB)
(72) Inventor: RANDALL, Stephen, London NW8 (GB)
(86) International application number: GB8800666
(87) International publication number: WO8901658

(56) References cited:
- DE-A- 2 537 400
- US-A- 4 649 499
- PATENTABSTRACT OF JAPAN, ABSTRACT OF JP-58-86674, PUBLISHED 1983-05-24
- PATENT ABSTRACT OF JAPAN, ABSTRACT OF JP-58-14247, PUBLISHED 1983-01-27

## Description

This invention relates to a method of and apparatus for processing handwritten graphical input in a stylus controlled portable data processing apparatus, in particular where the apparatus can provide the same functions, typically in organising and presenting data, as a conventional personal organiser.

The term conventional personal organiser used herein refers to a compact hand held loose leaf binder into which may be inserted a number of pages which are obtainable in a variety of printed formats. For instance, a set of pages forming a year diary may be obtained, as may be a set of pages forming an A-Z address section. In addition to these conventional features, other pages, for instance maps, events calendars, and personal expenditure cost sheets may be obtained. Consequently, the conventional personal organiser has become in recent years a popular and to some indispensable medium for recording information. The term electronic personal organiser refers to an electronic device which can provide the functions of a conventional personal organiser.

An essential ingredient for the usability of such conventional personal organisers is the familiarity of their appearance to a user. The familiarity is based not only on the arrangements of alphanumeric visual cues, but on additional visual cues presented to the user. When looking at a conventional personal organiser open at, for instance, a page of the address section, the alphanumeric visual cues comprise cues specifying what sort of data is to be written in, for instance the alphanumeric visual cue may be the letter "A" at the top of a page specifying that surnames beginning with the letter "A" should be entered on that page. Such cues may be essential to both render the data meaningful, in that they give the context of the data, and to facilitate data retrieval. For instance, an entry in the address section is only readily retrievable because of the organisation of sections each corresponding to a letter of the alphabet, and will only be appropriately entered in the first place because of the cues to the user to input the name in its appropriate section. It is, however, essential that there are not only these alphanumeric cues derived from the column of letters of the alphabet running along one edge but also further cues deriving from for example, the following features; the provision of each letter of the alphabet on a sequential arrangement of single tabs; the overlaying a sheath of pages being divided into sections with each section having as its first page a page with such a tab, these cues being indicative of the organisaiton of the pages; the ring binders indicative of the manner in which pages may be turned over; and also the features which trigger the recognition in the user that the user is faced with paper upon which, his experience informs him, he can write with a pen or pencil.

Without these cues the user may not only not be able to readily use the address section, he may actually not recognise it as an address section at all. When the user recognises that what is before him is a depiction of an address section comprised of a number of pages and readily appreciates the manner in which he may use it there can be said to be a sufficiency of visual cues.

The term "representational graphics" used herein refers to a depiction displayed by a device which to a user sufficiently represents the appearance of a number of printed pages such as are used in a conventional personal organisor and which are together organised in the same manner as pages in a conventional personal organisor so that the nature and mode of use of the device would be readily apparent to that user, i.e. depictions which provide a sufficency of visual cues.

### DESCRIPTION OF PRIOR ART

Portable computers are known which provide a variety of desirable notebook features such as diary or address book functions. Generally, information input is achieved through an alphanumeric keyboard. Consequently, input of information is not only somewhat slow but is also limited solely to alphanumeric text.

It is also known to provide arrangements for converting the position of a manually operated writing or tracing member into an electrical signal. For instance, transducer pads are known which provide electrical signals representing the co-ordinates of a point at which pressure is applied locally, by a stylus, to a writing surface of the pad.

Generally, such a writing surface is a flexible electrically resistive membrane separated from an electrically conductive base so that the pressure applied by the stylus results in electrical contact between the membrane and the base. Each pair of opposing edges of the membrane may have a voltage applied so that when pressure is applied by the stylus the potential of the base at the contact point is indicative of a position co-ordinate of the stylus. Consequently, continuous monitoring of the position of the stylus writing or drawing is possible, allowing the simultaneous reproduction of the writing or drawing at a remote location and the digitising and storing of the writing or drawing in a digital frame store. Commonly, such arrangements are used in computerised design and computer graphic design systems having substantial memories and processing power.

JP-58-86674 shows a light emitting stylus co-operating with light detecting elements in a display. This arrangement allows the user to input a bit mapped image onto the display immediately below the stylus.

In addition, it is known to lay a transducer pad over a display panel to provide a touch screen. EP-0271280 discloses a personal computer based system using such an arrangement, which displays typographical arrangements corresponding to forms. The computer generates a number of user prompts, for instance highlighting a field in the form to be filled in and providing a menu of alternatives for insertion in that filed. It will be appreciated that what is displayed are not representational graphics within the meaning of the term as defined herein.

Further reference may be made to GB-A-2145547 which discloses an electronic memo device comprising a transducer pad, display panel and keyboard. The purpose of the keyboard is to allow the input of indexing data to be associated with handwritten data input using the transducer pad. No representational graphics are utilised in this device whatsoever. The operating procedures required to use the are also neither immediately familiar nor even readily learnt; the user/device dialogue is both unnatural and complicated. This is a major disadvantage when compared to the familiarity and ease of the use of a conventional memory device, i.e printed memo pad.

Reference may also be made to US-A-4649499 which shows a conventional PC with a touch screen displaying graphics simulating a rotary card folder. The user inputs data onto the cards using a conventional keyboard, but can select different cards by touching the tab of that card, thereby interacting with the touch screen. Stylus based input is not envisaged. A simulation of a calculator is also shown, although the specification is silent on how the user moves from the rotary card file mode to the calculator mode.

### SUMMARY OF THE INVENTION

In accordance with the present invention, a method of processing handwritten graphical input from a stylus in a portable data processing apparatus, the apparatus comprising a position detection means overlaying said display means and being adapted to display representational graphics simulating one or more pages bound into a notebook by generating signals to provide the representational graphics to be displayed on the display means, with at least one simulated page of the representational graphics comprising at least one region provided to be written on, the stylus being manually positionable over a location in the region of the simulated page to provide an output to be displayed at that location; comprises the steps of:
processing the handwritten graphical input by
   [a] receiving an input signal from the position detection means, the input signal defining the position of the stylus over the said location in the region of the simulated page, and
   [b] displaying the input from the stylus as the said output at the said location in the simulated page, the output consisting of the trail of ink that would arise if the stylus were a pen and the simulated page a real sheet of paper; and
storing the input or data derived from the input as data at positions in a memory associated with the location in the simulated page.

Consequently, not only may the user input any graphic information he chooses to be reproduced by the display means but he may also achieve the input in a way that is both familiar and entirely natural since simulated pages are utilised and the input is processed to appear directly on the simulated pages as "electronic ink", i.e. as if the simulated pages were paper and the stylus a pen. Additionally, the graphics depict pages, including the information signifying the function of those pages, in a format familiar from conventional diaries and address books, for example. Furthermore, the graphics may provide further visual cues such as, for instance, derive from the depiction of the overlying of adjacent pages and the depiction of ring binders. Consequently, what is actually seen by the user is an image which may, by the sufficiency of visual cues, be immediately recognised as a depiction of, and thus associated with, a personal organiser.

Accordingly, the invention is predicated on the insight that a data processing apparatus may be made that is as easy and familiar to use as a conventional personal organisor if representational graphics are used and if the input can be processed to allow direct input onto.a simulated page. Adata processing apparatus in accordance with the present invention, typically perceived by the user as a variant of a personal organisor because of the screen display layout, will have numerous advantages over a conventional organisor, not only in terms of data storage capability but in terms of the further inventive features referred to below.

Conveniently, the input from the stylus may be arranged to allow selection of a required operational mode of the apparatus in dependence on the tab selected, which selection occurs by the stylus being positioned over a tab to provide a tab selection signal. For instance, the display may provide the appearance of an open conventional personal organiser open at the front page, beneath which page appears the edges of a sheath of pages, some having tabs on which appears an indexing word, e.g "DIARY", signifying a particular operational mode. Selection of the required mode is then effected by touching the stylus to the image of the tab indexing the required mode so that it co-operates with the pad to produce the required electrical signal. Since the transducer pad is positioned adjacent to the display, typically overlying it, the user simply has to touch the stylus to the region directly overlying the tab required, i.e. apparently touch the tab itself, for the operational mode indexed by the tab to be selected. For instance, when the user is in the 'address' mode and wants to look at the 'B' section then the user simply touches the tab marked with the letter 'B' for the first page of the 'B' section to be displayed.

The term 'operational mode' used herein refers to the manner of operation. For example, when in the 'address' operational mode, the organisor is operating as an address book by displaying representational graphics depicting a conventional organisor open at its address section. The edges of a sheath of pages is displayed beneath a front page having a tab indexed by the Ietter A. Further tabs are shown defining sections of the sheath and each marked by a letter of the alphabet. Preferably, the transducer pad is translucent and substantially overlays the display means such that a given portion of an image on the display lies substantially below the position on the pad at which the member co-operates with the pad to result in the electrical signals utilised in forming the given portion.

Conveniently, there is provided the further step of generating signals to provide representational graphics depicting a page or pages turning over, after the selection of a required operational mode or pages within a mode and before the display of representational graphics associated with the selected mode or page. It will be appreciated that this greatly enhances the user friendliness of the apparatus by providing further familiar visual cues as to the working of the apparatus.

In another aspect of the invention, there is provided a data processing apparatus adapted to carrying out the above methods. The data processing apparatus is conveniently an electronic personal organisor. More particularly, there is provided an electronic apparatus arraged to be portable and operable to process handwritten graphical input from a stylus and to display representational graphics simulating one or more pages bound into a notebook and comprising:
means for generating signals to provide the representational graphics, with at least one simulated page comprising at least one region provided to be written on;
display means for displaying the said graphics;
means for processing the handwritten graphical input comprising [a] an input means comprising a position detection means overlaying said display means, and the said stylus, the stylus being manually positionable over a location in the region of the simulated page to thereby co-operate with the position detection means to provide an output to be displayed at that location and [b] means for converting the position of the stylus over the said location into electrical signals
   indicative of the position of the stylus with respect to the position detection means;
means for controlling the display means comprising means for utilising said electrical signals to display the output from the stylus at the said location, the output consisting of the trail of ink that would arise if the stylus were a pen and the simulated page a real sheet of paper; and
means for storing the graphical input, or data derived from the the input, as data at positions in a memory associated with the location in the simulated page.

### BRIEF DESCRIPTION OF THE DRAWINGS

An embodiment of the invention will now be described with reference to Figure 1 of the drawings, which is a plan view of a data processing apparatus in accordance with the present invention, Figure 2 which is a schematic block diagram illustrating the major circuitry of the data processing apparatus, Figures 3-6a which depict typical screen displays justifying why the present invention may be regarded as as electronic personal organisor, the displays comprising representational graphics which may be displayed by the display means of the device, and Figure 7 which depicts a simplified flowchart illustrating the operation of the organisor.

### DETAILED DESCRIPTION

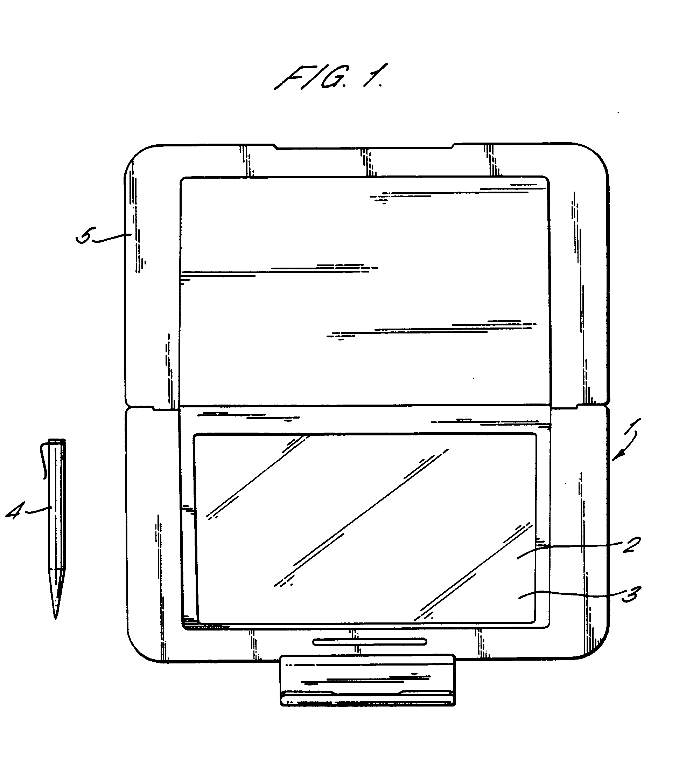

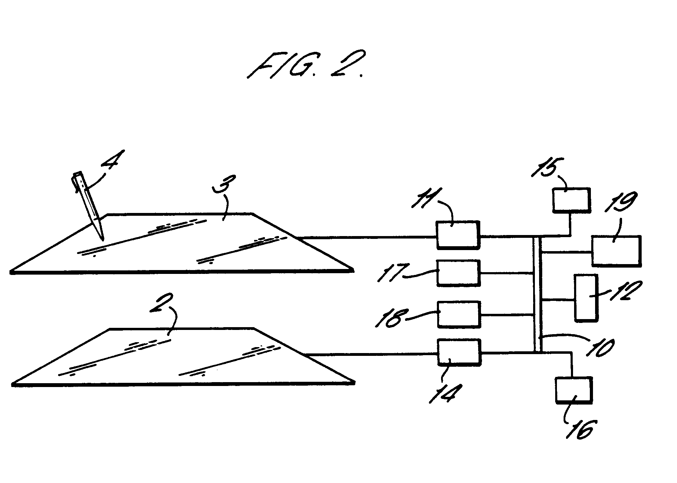

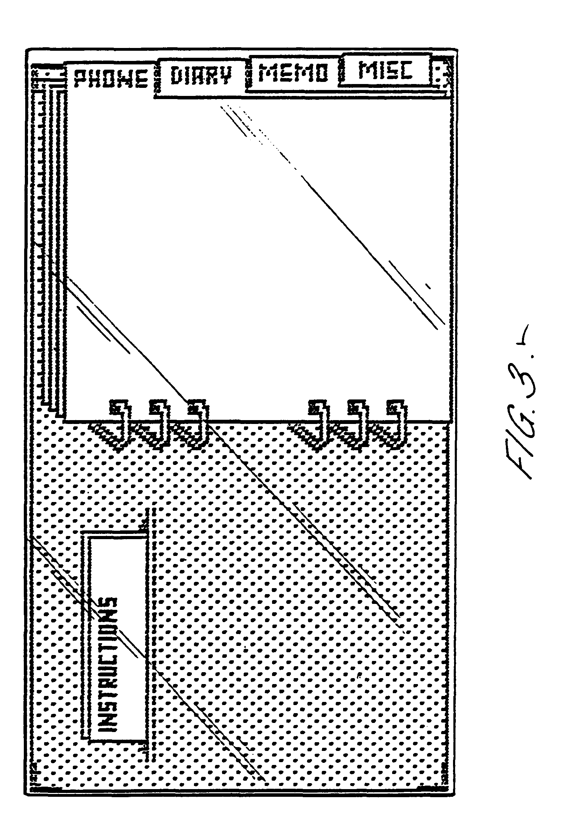

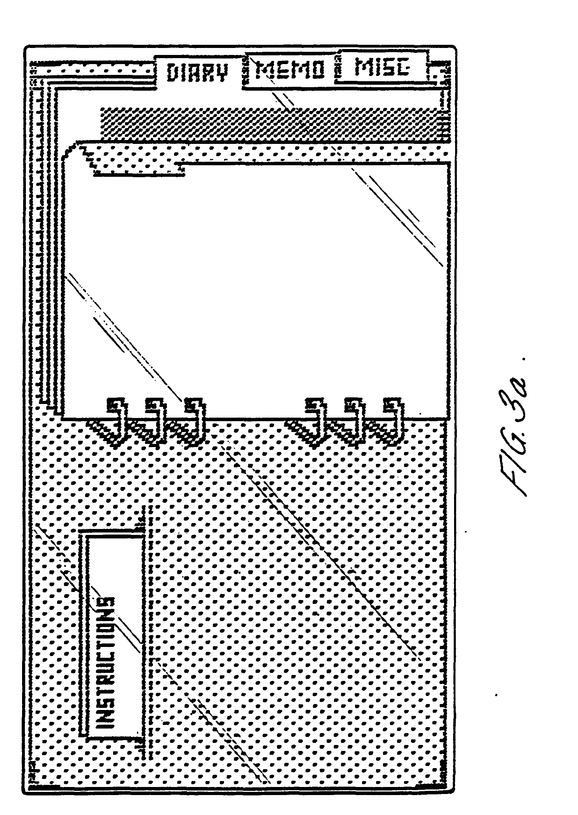

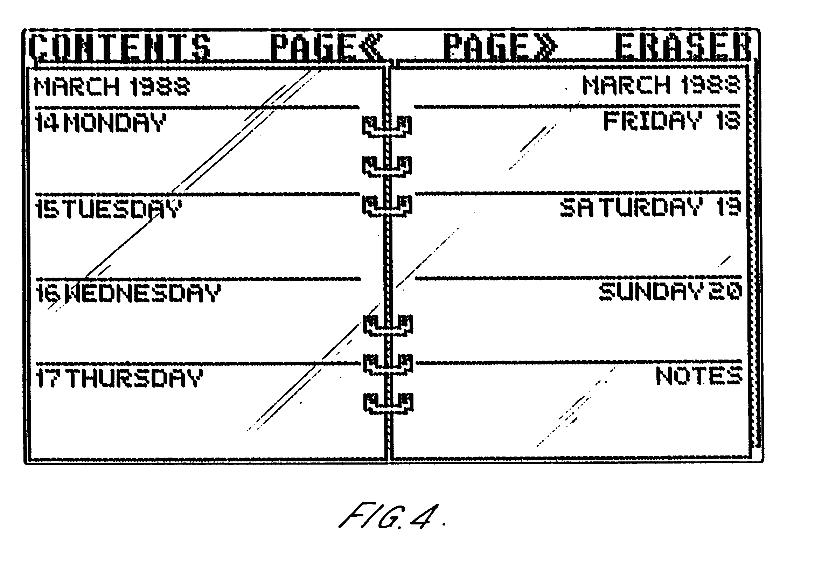

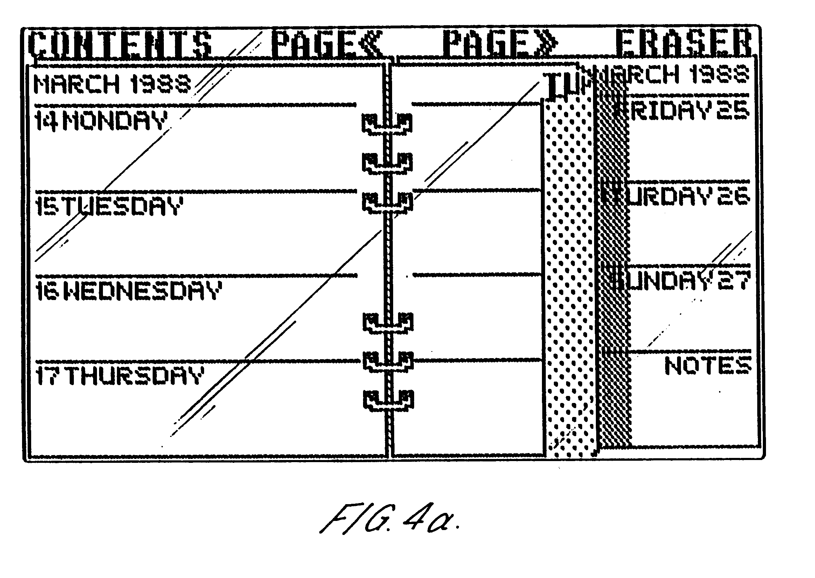

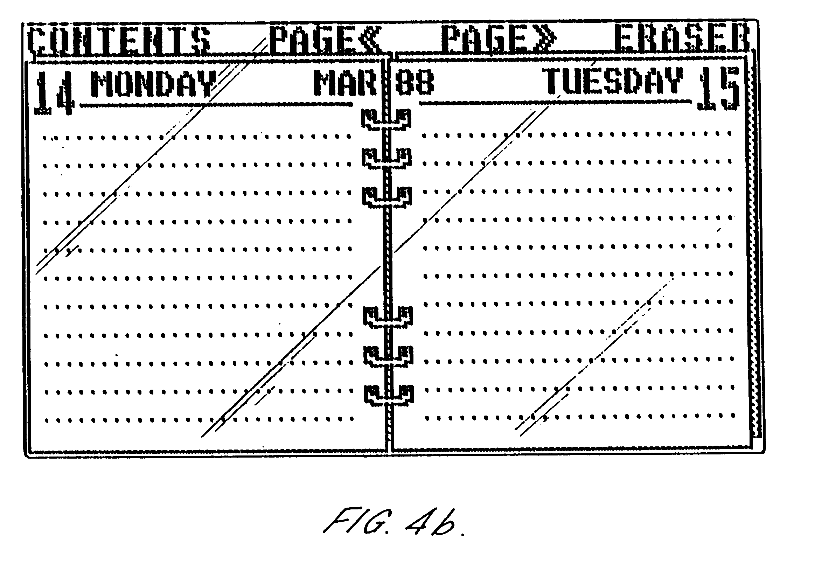

Referring now to Figure 1, a display means, indicated generally at 1, preferably comprising an LCD type display 2, is shown hingedly attached to a lid indicated generally at 5. An input means comprises a translucent transducer pad 3, overlying the display 2. The pad 3 may be a membrane type sensor operable to provide an electrical signal indicative of the position on the pad 3 at which pressure, in excess of a predetermined threshold press, is applied by a manually operated member, here shown as a pen type stylus. Further arrangements (not shown) of transducer pad 3 may prove convenient. For instance, the manually operated member 4 may be operable to provide a voltage signal to the pad 3, the pad 3 having sensors arranged to provide an electrical signal indicative of the position of the pad in dependence upon the voltage measured by said sensors.

It is preferable to have a pad with a slightly roughened surface so that the stylus does not slip and to more closely duplicate the feeling of pen writing on paper.

The display means 1 and lid 5 are arranged to close together to form a compact and portable unit which may be readily opended for use as an electronic personal organisor.

The stylus 4 may comprise first and second portions 6 and 7 respectively, with which contact may be alternatively made with the pad 3. Contact with the first portion 6 results in electrical signals which may be utilised in forming an image, whereas contact with the second portion 7 results in electrical signals which may be utilised in deleting an image. A variety of arrangements may be provided to enable discrimination between contact by the first and the second portions 6, 7 of the stylus.

It will be appreciated that an internal power supply and a variety of electronic components are contained within the device. It will also be appreciated that the detailed electronic design would be a routine matter for one skilled in the art.

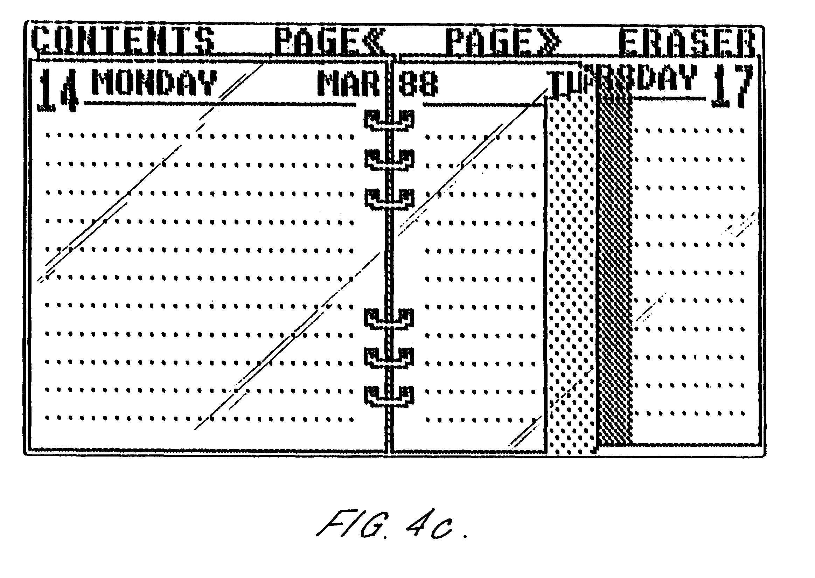

Referring now to Figure 2, the transducer pad 3 is shown schematically overlaying the LCD type display. The transducer pad 3 is of a type known as an Indium Tin Oxide (ITO) pad and is operable to supply a signal indicative of the x-y co-ordinates at which the stylus 4 has touched the pad 3. The operation of the pad, for example the manner in which it converts the position of the stylus to electrical signals indicative of the x-y co-ordinates, is well known and will not be further described herein.

The electrical signals from the pad 3 are supplied to an A to D converter 11 feeding a data path or system bus 10. A CPU 12 is connected for bidirectional data flow to the bus 10, as is a RAM 17. A ROM 18 is also connected to bus 10, being programmed with the operating and application programmes for the organisor, which are executed by microprocessor or CPU 12. CPU 12 provides all control signals via bus 10. RAM 17 stores the user input in locations dependent upon the displayed graphics associated with the input. RAM 17 may be a non-volatile device such as an EE-PROM or magnetic bubble memory, such as the 4 megabit 7114 manufactured by Intel Corp. CPU 12 may be a powerful microprocessor such as the Z80 manufactured by Zilog Microcomputers or the 8088 manufactured by Intel Corp. A rechargeable battery pack (not shown) provides the power required by the various components such as CPU 12 and ROM 18. In addition there is provided an EIA RS-232 serial interface 19 connected to bus 10 for the inputting and off- loading of data. For instance, interface 19 provides a convenient means for communicating to a printer (not shown). Alternatively, the CPU 12 may include both ROM 17 and RAM 18, in which case the CPU 12 not only generates the signals to the display driver 14 which result in representational graphics being displayed, but also stores the digital signals from the A to D convertor 11 in predetermined locations according to the representational graphics displayed and with which the resulting image must of course be associated. A display driver 14 connected to bus 10 drives the LCD display 2 which is preferably a super- twist type display or a neutralised twisted nematic display.

A smart card reader 15 may be provided and provide input to the bus 10 so that information stored on a smart card may be accessed and displayed. The reader 15 may either be integral with the device and thus connected to bus 10 (as shown) or may be an optional component accessing bus 10 via the interface 19. This allows a number of additional modes to be catered for by the present invention. For example, a smart card containing a microprocessor programmed as a full function calculator may be provided, in which case a display of a keyboard of a full function calculator plus display would be shown. The user would operate the calculator by pressing the keys of the keyboard in the same way as if using a real calculator. For some applications, the card may comprise essentially only a memory chip preprogrammed with specific information. For instance, the card may contain maps or other specialised information. There may also be an additional memory store 16 into which the information stored in the RAM 17 may be downloaded. This additional memory store 16 is removable for secure keeping so that should the associated electronic personal organisor be lost then the memory store 16 may be used to transfer its contents into a further electronic personal organisor. It will be appreciated that this is a significant advance over that possible with a conventional personal organisor. Memory store 16 may be integral with the device and connected to bus 10 (as shown) or may be an optional component accessing the bus 10 via interface 19.

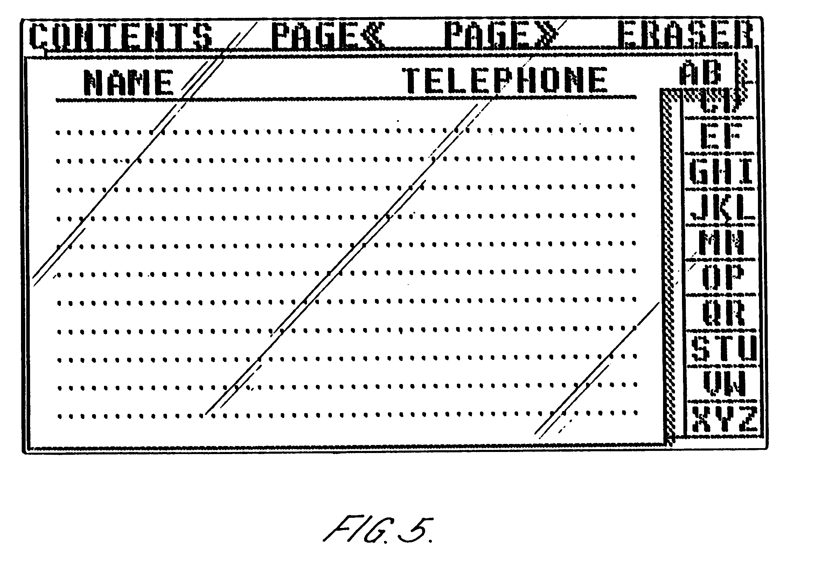

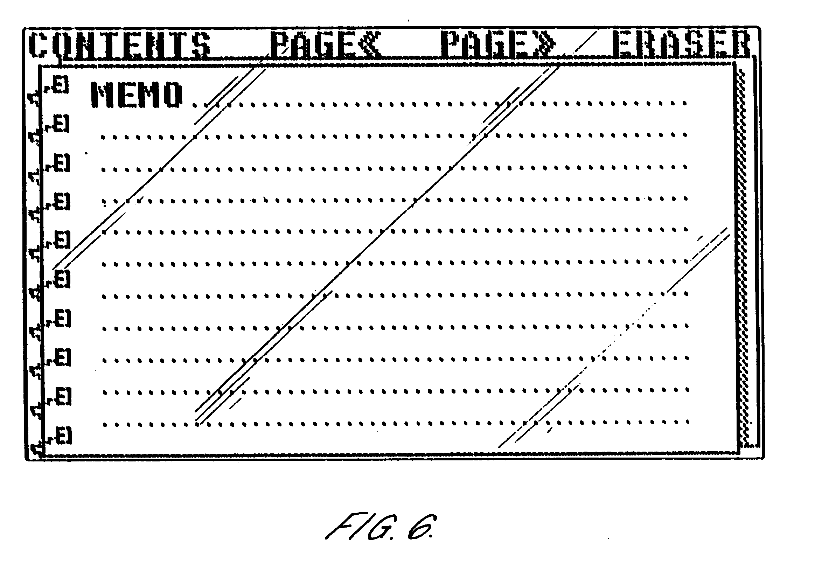

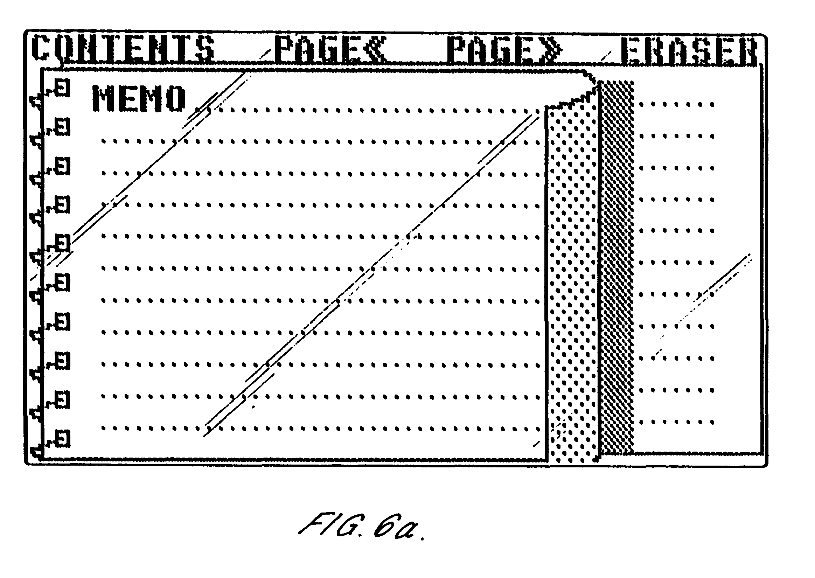

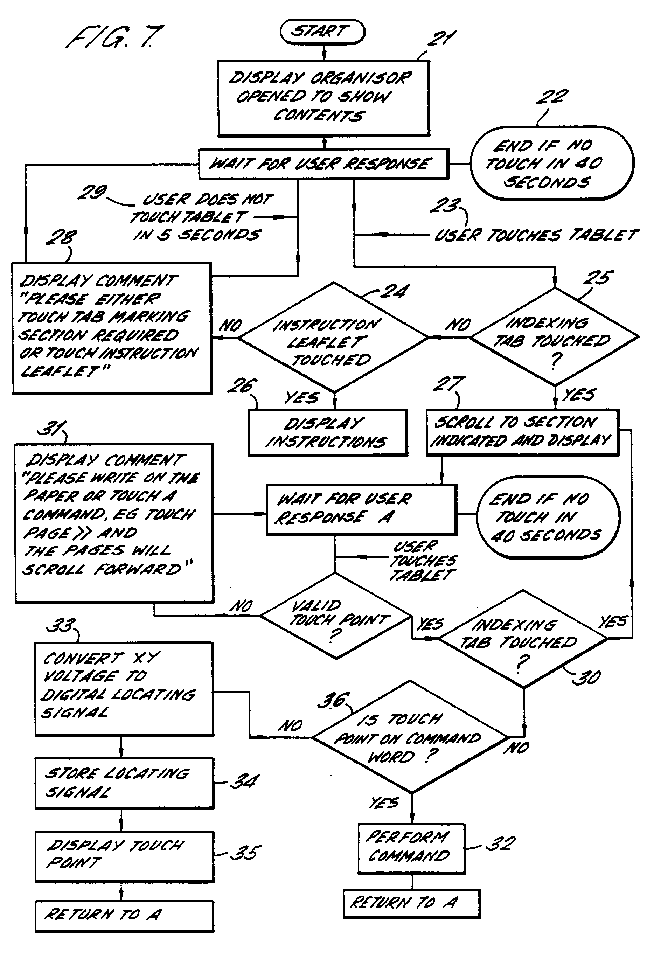

The use of the device will now be described with reference to Figures 3 to 6a and Figure 7. On opening the lid 5, which automatically turns the device on, there is shown (step 21) on display 2 the depiction of Figure 3. It will be appreciated that the representational graphics illustrated provide the appearance of a conventional personal organisor and that the user will at once be familiar with that presented to him.

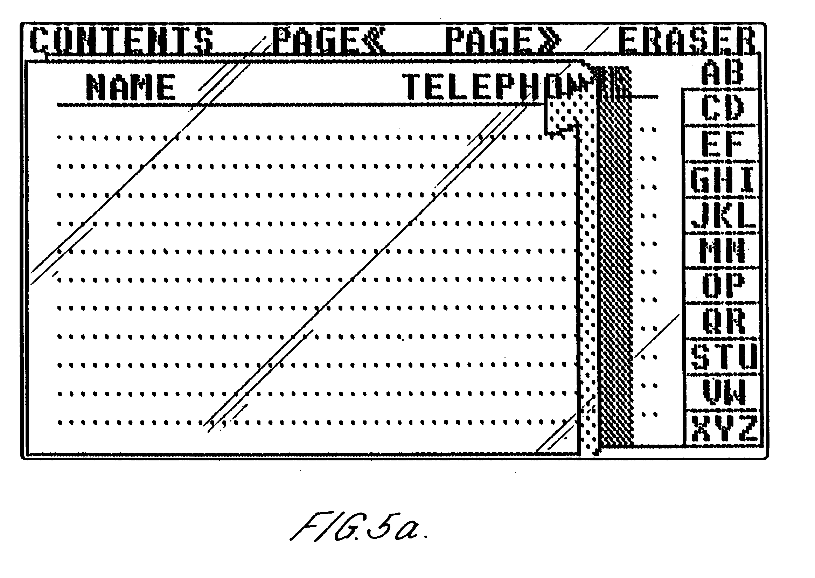

The user may then touch (step 23) the pad 3 using stylus 4 overlaying the region of screen 2 of interest. For instance, if the user touches (step 24) the region demarcated within the boundary to the word "instructions", i.e. the portion representing an instruction booklet, then a set of instructional notes (not shown) will be displayed (step 26) on the screen for a short while before reverting to the Figure 3 depiction. Alternatively, should the user touch (step 25) the region of the pad overlaying an indexing tab, for instance the display of the tab marked "diary", then the telephone directory section will appear to be turned over (as illustrated in Figure 3a), (step 27) and the diary mode will then be entered with the display of the appearance of a conventional personal organisor opened at its diary section (as illustrated in Figure 4). Should the user not touch the tablet or pad within 5 seconds (step 29) of the initial depiction of the organisor opened to show its contents as shown in Figure 3, then there may be displayed (step 28) the comment "Please either touch tab marking section required or touch instruction leaflet". If there is still no touch from the user after 40 seconds then the organisorautomat- ically shuts off (step 22). Once in a section the display may be headed by four command words: "contents", "page «", "page )>" and "eraser". Should the user touch a command word then the command is carried out (step 32), for instance touching the command word "contents" (step 29) (it will be understood that the user is in fact only touching the ITO pad 3 immediately overlaying the portion of the LCD screen displaying "contents") and the display will revert back to that displayed in Figure 3. Should the user touch "page «" then successive pages of the section will be displayed with the intervening pages appearing to be turned over, as illustrated by a diary in Figure 4a. Figures 4b and 4c illustrate alternate layouts of the diary from that shown in Figure 4a and 4b. Similarly, should the user touch an indexing tab (step 30) (for instance a particular address section within the address pages) then that section will be scrolled to and displayed (step 27). Valid touch points are therefore points overlaying indexing tabs, command words. Similarly, so are points which can reproduce the user input, i.e. points corresponding to paper in the representation. Should no valid touch point be pressed then after 5 seconds the comment (step 31) "Please write on the paper or touch a command, eg touch page and the pages will scroll forward" will appear.

Figures 5 and 5a illustrate the display when the apparatus is in the address book mode.

Figures 6 and 6a illustrate the display when the apparatus is in the memo pad mode.

To input information, the user simply uses the stylus 4 as if it were a pen and the ITO pad 3 a sheet of paper. The screen 2 will darken under areas of the pad 3 touched by the stylus 4 for regions which are valid touch points for reproducing graphical input. Graphical input (such as writing) will be converted to a digital locating signal via the A to D converter 11 (step 33) and then stored in the RAM 17 (step 34) and also displayed (step 35) on the display.

All previously entered input can be recalled together with the relevant representational graphics, which of course render the input locatable, by entering the appropriate mode and scrolling forwards or backwards through the pages as hereinbefore described. In addition there is provided an "ERASER" function. Should the user touch "ERASER" then any input to which the stylus is touched will disappear and be erased from storage.

## Claims

1. Method of processing handwritten graphical input from a stylus (4) in a portable data processing apparatus, the apparatus comprising a position detection means (3) overlaying said display means (2) and being adapted to display representational graphics simulating one or more pages bound into a notebook by generating signals (21) to provide the representational graphics to be displayed on the display means (2), with at least one simulated page of the representational graphics comprising at least one region provided to be written on, the stylus (4) being manually positionable over a location in the said region of the simulated page to provide an output to be displayed at that location; the method comprising the steps of:
processing the handwritten graphical input by
[a] receiving (23) an input signal from the position detection means (3), the input signal defining the position of the stylus (4) over the said location in the region of the simulated page, and
[b] displaying (35) the input from the stylus (4) as the said output at the said location in the simulated page, the output consisting of the trail of ink that would arise if the stylus were a pen and the simulated page a real sheet of paper; and
storing (34) the input or data derived from the input as data at positions in a memory (17) associated with the location in the simulated page.

2. The method of Claim 1 comprising the further step of generating signals to provide a display of representational graphics depicting a page or pages turning over on the display means (2).

3. The method of Claim 1 in which the representational graphics depict simulated pages arranged into various sections separated by page dividers with tabs, comprising the further step (30) of utilising electrical signals defining the position of the stylus to allow selection of a required operational mode of the apparatus in dependence on the tab selected, which selection occurs by the stylus being positioned over a tab to provide a tab selection signal.

4. The method of either Claim 2 or Claim 3 wherein generating signals to provide the representational graphics comprises the further steps of generating signals (27) to provide representational graphics depicting a page or pages turning over, after the selection of a required operational mode or pages within a mode and before the display of representational graphics associated with the selected mode or page.

5. The method as claimed in any preceding claim wherein the position detection means (3) is a membrane transducer pad operable to provide an electrical signal indicative of the position of the pad at which pressure, in excess of a predetermined threshold of pressure, is applied (23) by said stylus (4).

6. The method of any preceding claim further comprising the steps of reading a programmable read-only memory device, and generating predetermined representational graphics in dependence on the information held in the programmable read-only memory device.

7. The method of any preceding claim further comprising the steps of transferring all information stored to an external store.

8. The method claimed in Claims 3 or 4 wherein a given operational mode is an application program.

9. The method claimed in Claim 8 wherein the application program provides a diary or address function.

10. Electronic apparatus arranged to be portable and operable to process handwritten graphical input from a stylus (4) and to display representational graphics simulating one or more pages bound into a notebook and comprising:
means for generating signals (21) to provide the representational graphics, with at least one simulated page comprising at least one region provided to be written on;
display means (2) for displaying the said graphics;
means for processing the handwritten graphical input comprising [a] an input means comprising a position detection means (3) overlaying said dispay means, and the said stylus (4), the stylus (4) being manually positionable over a location in the said region of the simulated page to thereby co-operate with the position detection means (3) to provide an output to be displayed at that location and [b] means for converting (33) the position of the stylus over the said location into electrical signals indicative of the position of the stylus with respect to the position detection means;
means for controlling the display means comprising means for utilising said electrical signals to display (35) the input from the stylus (4) as the output at the said location, the output consisting of the trail of ink that would arise if the stylus (4) were a pen and the simulated page a real sheet of paper; and
means for storing (34) the graphical input, or data derived from the the input, as data at positions in a memory (17) associated with the location in the simulated page.

11. The apparatus as claimed in Claim 10 further comprising means for generating signals to provide a display of representational graphics depicting a page or pages turning over on the display means.

12. The apparatus as claimed in Claim 10 in which the representational graphics depict simulated pages arranged into various sections separated by page dividers with tabs wherein the means for utilising the electrical signals is adapted to allow selection of a required operational mode of the apparatus in dependence on the tab selected, which selection occurs by the stylus being positioned over tab to provide a tab selection signal.

13. The apparatus as claimed in Claim 12 wherein the means for generating signals to provide the representational graphics is arranged to provide representational graphics depicting a page or pages turning over, after the selection of a required operational mode or pages within a mode and before the display of representational graphics associated with the selected mode or page.

14. The apparatus as claimed in any preceding Claims 10-13 wherein the position detection means (3) is a membrane transducer pad operable to provide an electrical signal indicative of the position of the pad at which pressure, in excess of a predetermined threshold of pressure, is applied (23) by said stylus (4).

15. The apparatus as claimed in any preceding Claims 10-14 further comprising means for reading a memory device, the means for generating predetermined representational graphics being adapted to generate graphics in dependence on the information held in the memory device.

16. The apparatus as claimed in any preceding Claims 10-15 further comprising means for transferring all information stored to an external store.

17. The apparatus claimed in Claim 12 or 13 wherein a given operational mode is an application program.

18. The apparatus claimed in Claim 17 wherein the application program provides a diary or address function.

## Patentansprüche

1. Verfahren zur Verarbeitung handgeschriebener graphischer Eingaben mittels eines Schreibstifts (4) in einer tragbaren Datenverarbeitungsvorrichtung, wobei die Vorrichtung eine Positionserfassungseinrichtung (3) umfaßt, die die Anzeigeeinrichtung (2) überlagert und zum Abbilden von bildlichen Darstellungen geeignet ist, die eine oder mehrere zu einem Notizbuch gebundene Seiten simuliert, indem sie Signale (21) erzeugt, die die auf derAbbildungseinrichtung (2) abzubildenden bildlichen Darstellungen liefern, wobei wenigstens eine simulierte Seite der bildlichen Darstellung wenigstens ein zum Beschreiben zur Verfügung gestelltes Gebiet umfaßt, der Schreibstift (4) von Hand über einem Ort in dem Gebiet dersimulierten Seite in Stellung gebracht werden kann, um eine an jenem Ort anzuzeigende Ausgabe zu liefern, wobei das Verfahren die folgenden Schritte umfaßt:
Verarbeitung der handgeschriebenen graphischen Eingabe durch
[a] Empfang (23) eines Eingabesignals von der Positionserfassungseinrichtung (3), wobei das Eingabesignal die Position des Schreibstifts (4) über dem Ort in dem Bereich der simulierten Seite festlegt, und
[b] Anzeige (35) der Eingabe mittels des Schreibstifts (4) als die Ausgabe an dem Ort auf der simulierten Seite, wobei die Ausgabe aus der Tintenspur besteht, die sich ergäbe, wenn der Schreibstift eine Feder und die simulierte Seite ein wirkliches Blatt Papier wäre; sowie
Speichern (34) der Eingabe oder aus der Eingabe abgeleiteter Daten als Daten an dem Ort auf der simulierten Seite zugeordneten Stellen in einem Speicher (17).

2. Verfahren nach Anspruch 1, bei dem als weiterer Schritt Signale erzeugt werden, die eine Abbildung einer bildlichen Darstellung vermitteln, die das Umblättern einer oder mehrerer Seiten auf der Abbildungseinrichtung (2) zeigen.

3. Verfahren nach Anspruch 1, bei dem die bildliche Darstellung simulierte Seiten darstellt, die mit Hilfe von mit Reitern versehenen Seitenteilern als verschiedene Abschnitte angeordnet sind, wobei als weiterer Schritt (30) die Position des Schreibstifts festlegende elektrische Signale herangezogen werden, um die Wahl einer gewünschten Betriebsweise der Vorrichtung je nach dem gewählten Reiter zu ermöglichen, wobei die Wahl durch Positionieren des Schreibstifts über einem Reiter erfolgt, was ein Reiterauswahlsignal ergibt.

4. Verfahren nach Anspruch 2 oderAnspruch 3, wobei bei der Signalerzeugung zum Liefern der bildlichen Darstellung als weitere Schritte die Erzeugung von Signalen (27) zur Lieferung einer bildlichen Darstellung erfolgt, die das Umblättern einer oder mehrerer Seiten darstellt, nach der Wahl einer gewünschten Betriebsweise oder von Seiten innerhalb einer Betriebsweise und vor dem Abbilden von der gewählten Betriebsweise oder Seite zugeordneten bildlichen Darstellungen.

5. Verfahren nach den vorhergehenden Ansprüchen, wobei es sich bei der Positionserfassungseinrichtung (3) um ein Membran-Wandlertablett handelt, das so bedient werden kann, daß es ein elektrisches Signal liefert, aus dem auf die Stelle des Tabletts, an der durch den Schreibstift (4) über einen vorgegebenen Druckschwellwert hinausgehender Druck ausgeübt (23) wird, geschlossen werden kann.

6. Verfahren nach den vorhergehenden Ansprüchen, bei dem als weitere Schritte eine programmierbare Nur-Lese-Speichervorrichtung gelesen wird und je nach den in der programmierbaren Nur-Lese-Speichereinrichtung gespeicherten Daten vorgegebene bildliche Darstellungen erzeugt werden.

7. Verfahren nach den vorhergehenden Ansprüchen, bei dem als weitere Schritte alle gespeicherten Daten an einen externen Speicher übermittelt werden.

8. Verfahren nach den Ansprüchen 3 oder 4, wobei eine bestimmte Betriebsweise durch ein Anwendungsprogramm dargestellt wird.

9. Verfahren nach Anspruch 8, wobei das Anwendungsprogramm eine Kalender- oder Adressenfunktion liefert.

10. Entsprechend gestaltete elektronische Vorrichtung, die tragbar ist und so betrieben werden kann, daß sie eine handgeschriebene graphische Eingabe aus einem Schreibstift (4) verarbeiten und bildliche Darstellungen, die eine oder mehrere zu einem Notizbuch gebundene Seiten simulieren, darstellen kann und:
eine Einrichtung zur Erzeugung von Signalen (21), um die bildlichen Darstellungen zu liefern, wobei wenigstens eine simulierte Seite wenigstens ein als beschreibbar zur Verfügung gestelltes Gebiet umfaßt;
eine Abbildungsvorrichtung (2) zur Abbildung der Darstellungen;
Einrichtungen zur Verarbeitung der handgeschriebenen graphischen Eingabe, umfassend [a] eine Eingabeeinrichtung mit einer Positionserfassungseinrichtung (3), die die Abbildungsvorrichtung überlagert, und dem Schreibstift (4), wobei der Schreibstift (4) von Hand über einem Ort in dem Gebiet der simulierten Seite positioniert werden kann, um dadurch mit der Positionserfassungseinrichtung (3) zusammenzuarbeiten, um so eine an jenem Ort anzuzeigende Ausgabe zu liefern, sowie [b] Einrichtungen zur Umwandlung (33) der Position des Schreibstiftes über dem Ort in elektrische Signale, aus denen auf die Position des Schreibstifts hinsichtlich der Positionserfassungseinrichtung geschlossen werden kann;
Einrichtungen zur Steuerung der Abbildungseinrichtung mit Einrichtungen zur Nutzung der elektrischen Signale, um die Eingabe aus dem Schreibstift (4) als Ausgabe an dem Ort anzuzeigen (35), wobei die Ausgabe aus der Tintenspur besteht, die sich ergäbe, wenn der Schreibstift (4) eine Feder und die simulierte Seite ein wirkliches Blatt Papier wäre; sowie
Speichern (34) der graphischen Eingabe oder aus der Eingabe abgeleiteter Daten als Daten an dem Ort auf der simulierten Seite zugeordneten Stellen in einem Speicher (17) umfaßt.

11. Vorrichtung nach Anspruch 10, die außerdem eine Einrichtung zur Erzeugung von Signalen umfaßt, die eine Abbildung einer bildlichen Darstellung vermitteln, die das Umblättern einer oder mehrerer Seiten auf der Anzeigeeinrichtung zeigen.

12. Verfahren nach Anspruch 10, bei dem die bildliche Darstellung simulierte Seiten darstellt, die mit Hilfe von mit Reitern versehenen Seitenteilern als verschiedene Abschnitte angeordnet sind, wobei die Einrichtung zum Heranziehen der elektrischen Signale sich dazu eignet, die Wahl einer gewünschten Betriebsweise der Vorrichtung je nach dem gewählten Reiter zu ermöglichen, wobei die Wahl durch Positionieren des Schreibstifts über einem Reiter erfolgt, was ein Reiterauswahlsignal ergibt.

13. Vorrichtung nach Anspruch 12, wobei die Einrichtung zur Signalerzeugung zum Liefern der bildlichen Darstellung so angeordnet ist, daß sie eine bildliche Darstellung liefert, die das Umblättern einer oder mehrerer Seiten zeigt, nach der Wahl einer gewünschten Betriebsweise oder von Seiten innerhalb einer Betriebsweise und vor dem Abbilden von der gewählten Betriebsweise oder Seite zugeordneten bildlichen Darstellungen.

14. Vorrichtung nach den vorhergehenden Ansprüchen 10-13, wobei es sich bei der Positionserfassungseinrichtung (3) um ein Membran-Wandlertablett handelt, das so bedient werden kann, daß es ein elektrisches Signal liefert, aus dem auf die Stelle des Tabletts, an der durch den Schreibstift (4) über einen vorgegebenen Druckschwellwert hinausgehender Druck ausgeübt (23) wird, geschlossen werden kann.

15. Vorrichtung nach den vorhergehenden Ansprüchen 10-14, das weiter eine Einrichtung zum Lesen einer Speichervorrichtung umfaßt, wobei die Einrichtung zur Erzeugung vorgegebener bildlicher Darstellungen dazu geeignet ist, graphische Darstellungen je nach den in der Speichervorrichtung gespeicherten Daten zu erzeugen.

16. Vorrichtung nach den vorhergehenden Ansprüchen 10-15, die weiter eine Einrichtung zum Übertragen der gesamten gespeicherten Daten an einem externen Speicher umfaßt.

17. Vorrichtung nach den Ansprüchen 12 oder 13, wobei eine bestimmte Betriebsweise durch ein Anwendungsprogramm dargestellt wird.

18. Vorrichtung nach Anspruch 17, wobei das Anwendungsprogramm eine Kalender- oder Adressenfunktion liefert.

## Revendications

1. Méthode de traitement d'une saisie graphique manuscrite à partir d'un stylet (4) dans un appareil de traitement de données portable, l'appareil comprenant un dispositif de détection de position (3) superposé audit ispositif d'affichage (2) et étant adapté pour afficher des graphiques figuratifs simulant une ou plusieurs pages liées en un carnet en générant des signaux (21) destinés à produire les graphiques figuratifs devant être affichés sur le dispositif d'affichage (2), avec au moins une page simulée des graphiques figuratifs comprenant au moins une région destinée à recevoir l'écriture, le stylet (4) étant positionnable manuellement au-dessus d'un emplacement de ladite région de la page simulée pour fournir une sortie devant être affichée à cet endroit ; la méthode comprenant les étapes suivantes :
traitement de la saisie graphique manuscrite par
(a) réception (23) d'un signal d'entrée en provenance du dispositif de détection de position (3), le signal d'entrée définissant la position du stylet (4) au-dessus dudit emplacement dans la région de la page simulée, et
(b) affichage (35) de la saisie effectuée avec le stylet (4) sous la forme de ladite sortie audit emplacement dans la page simulée, la sortie étant composée de la trace de l'encre qui se produirait si le stylet était un stylo et si la page simulée était une vraie feuille de papier ; et
mémorisation (34) de la saisie ou des données dérivées de la saisie sous forme de données à des positions dans une mémoire (17) associées avec l'emplacement dans la page simulée.

2. La méthode de la revendication 1 comprenant en plus l'étape consistant à générer des signaux destinés à fournir un affichage des graphiques figuratifs représentant une page ou des pages en train d'être tournées sur le dispositif d'affichage (2).

3. La méthode de la revendication 1 dans laquelle les graphiques figuratifs représentent des pages simulées disposées en différentes sections séparées par des intercalaires avec des onglets, comprenant en plus l'étape (30) qui consiste à utiliser des signaux électriques définissant la position du stylet pour permettre la sélection d'un mode opérationnel souhaité de l'appareil en fonction de l'onglet sélectionné, laquelle sélection s'effectuant par le stylet positionné au-dessus d'un onglet afin de produire un signal de sélection d'onglet.

4. La méthode, soit de la revendication 2, soit de la revendication 3, avec laquelle la génération des signaux destinés à produire les graphiques figuratifs comprend en plus les étapes consistant à générer des signaux (27) pour produire des graphiques figuratifs représentant une page ou des pages en train d'être tournées, après la sélection d'un mode opérationnel souhaité ou de pages dans un mode, et avant l'affichage des graphiques figuratifs associés avec le mode ou la page sélectionné(e).

5. La méthode telle qu'elle est revendiquée dans l'une des revendications précédentes avec laquelle le dispositif de détection de position (3) est une tablette à capteur à membrane utilisable pour fournir un signal électrique indiquant la position de la tablette sur laquelle est appliquée une pression (23), supérieure à un seuil de pression prédéterminé, avec ledit stylet (4).

6. La méthode de l'une des revendications précédentes comprenant en plus les étapes de la lecture d'une mémoire morte programmable et de la génération de graphiques figuratifs prédéterminés en fonction des informations contenues dans la mémoire morte programmable.

7. La méthode de l'une des revendications précédentes comprenant en plus les étapes du transfert de toutes les informations mémorisées vers une mémoire externe.

8. La méthode revendiquée dans les revendications 3 ou 4 où un mode opérationnel donné est un programme d'application.

9. La méthode revendiquée dans la revendication 8 où le programme d'application fournit une fonction d'agenda ou de carnet d'adresses.

10. Appareil électronique conçu pour être portable et utilisable pour traiter une saisie graphique manuscrite d'un stylet (4) et pour afficher des graphiques figuratifs simulant une ou plusieurs pages liées en un carnet et comprenant :
un dispositif de génération de signaux (21) pour produire les graphiques figuratifs, avec au moins une page simulée comprenant au moins une région destinée à recevoir l'écriture ;
un dispositif d'affichage (2) pour afficher lesdits graphiques ;
un moyen de traitement de la saisie graphique manuscrite comprenant (a) un dispositif de saisie comprenant un dispositif de détection de position (3), superposé audit dispositif d'affichage, et ledit stylet (4), le stylet (4) étant positionnable manuellement au-dessus d'un emplacement de ladite région de la page simulée pour y agir conjointement avec le dispositif de détection de position (3) afin de fournir une sortie devant être affichée à cet endroit et (b) un dispositif de conversion (33) de la position du stylet au-dessus dudit emplacement en signaux électriques indiquant la position du stylet par rapport au dispositif de détection de position ;
dispositif pour commander le dispositif d'affichage comprenant un dispositif destiné à utiliser lesdits signaux électriques pour afficher (35) la saisie effectuée avec le stylet (4) sous la forme de la sortie audit emplacement, la sortie étant composée de la trace de l'encre qui se produirait si le stylet (4) était un stylo et si la page simulée était une vraie feuille de papier; et
dispositif pour la mémorisation (34) de la saisie graphique, ou des données dérivées de la saisie, sous forme de données à des positions dans une mémoire (17) associées avec l'emplacement dans la page simulée.

11. L'appareil tel qu'il est revendiqué dans la revendication 10, comprenant en plus un dispositif de génération de signaux destiné à produire l'affichage de graphiques figuratifs représentant une page ou des pages en train d'être tournées sur le dispositif d'affichage.

12. L'appareil tel qu'il est revendiqué dans la revendication 10, dans lequel les graphiques figuratifs représentent des pages simulées disposées en différentes sections séparées par des intercalaires avec des onglets, dans lequel le dispositif d'utilisation des signaux électriques est adapté pour permettre la sélection d'un mode opérationnel souhaité de l'appareil en fonction de l'onglet sélectionné, laquelle sélection s'effectue avec le stylet qui est positionné au-dessus d'un onglet pour produire un signal de sélection d'onglet.

13. L'appareil tel qu'il est revendiqué dans la revendication 12 dans lequel le dispositif de génération des signaux destiné à produire les graphiques figuratifs est conçu pour produire des graphiques figuratifs représentant une page ou des pages en train d'être tournées, après la sélection d'un mode opérationnel souhaité ou de pages au sein d'un mode et avant l'affichage des graphiques figuratifs associés avec le mode ou la page sélectionné(e).

14. L'appareil tel qu'il est revendiqué dans l'une des revendications précédentes 10 à 13, dans lequel le dispositif de détection de position (3) est une tablette à capteur à membrane utilisable pour fournir un signal électrique indiquant la position de la tablette sur laquelle est appliquée une pression (23), supérieure à un seuil de pression prédéterminé, avec ledit stylet (4).

15. L'appareil tel qu'il est revendiqué dans l'une des revendications précédentes 10 à 14, comprenant en plus un dispositif de lecture d'une mémoire, le dispositif de génération des graphiques figuratifs prédéterminés étant adapté pour générer des graphiques en fonction de l'information contenue dans la mémoire.

16. L'appareil tel qu'il est revendiqué dans l'une des revendications précédentes 10 à 15, comprenant en plus un dispositif pour transférer toutes les informations mémorisées vers une mémoire externe.

17. L'appareil revendiqué dans la revendication 12 ou 13, dans lequel un mode opérationnel donné est un programme d'application.

18. L'appareil revendiqué dans la revendication 17, dans lequel le programme d'application fournit une fonction d'agenda ou de carnet d'adresses.
